# EUROPEAN PATENT SPECIFICATION

(11) **EP 1 921 937 B1**
(45) Date of publication and mention of the grant of the patent: **18.11.2009**
(21) Application number: 06783820.1
(22) Date of filing: 18.08.2006
(51) Int. Cl.: A41D 19/00

(54) **WATERBORNE POLYURETHANE COATED GLOVE with textile LINER and manufacturing thereof**
MIT wässrigem POLYURETHAN BESCHICHTETEr HANDSCHUH mit textilbasis und herstellungsverfahren
GANT avec base textile revetue de POLYUReTHANE en phase acqueuse et procédé de fabrication

(30) Priority: 26.08.2005 MY 0504010
(43) Date of publication of application: 21.05.2008
(73) Proprietor: GOLDENDIP SDN. BHD., Lot 11, Jalan Baling Padang Meha Industrial Estate Padang Serai Kulim, Kedah (MY)
(72) Inventor: KHOO, Teng, Soon, Aaron, Bayan Lepas, 11900 Penang (MY)
(74) Representative: Stainthorpe, Vanessa Juliet
(86) International application number: PCT/MY2006/000002
(87) International publication number: WO 2007/024127

(56) References cited:
- EP-A- 0 053 910
- WO-A-99/23129
- WO-A-03/057750
- WO-A-2005/002375
- FR-A1- 2 776 168

## Description

### Field of the Invention

The present invention relates to a polyurethane coated glove in particular to a method of manufacturing a waterborne polyurethane coated glove liner.

### Background of the Invention

Conventional textile-supported solvent-based polyurethane gloves can provide a light gripping surface for use in working environments. However, these gloves may contain dimethyl formamide (DMF) and / or similar unfavorable solvents which can be potentially detrimental to the health of the wearers or users as well as to the ecosystems and to the environments surrounding the manufacturing plants. The presence of silicone in this conventional polyurethane also gives unfavorable response in the glove markets.

Conventional manufacturing processes for such gloves can include dipping glove liners into DMF or other solvents-based polyurethane coating. It then undergoes a series of immersions in water to facilitate gelling of films and the leaching of solvents. However, undue absorption and strikethrough of the applied dipped coating into and through the glove liners to the internal surfaces can occur. These occurrences can interfere with desired properties of the internal surfaces, which can include reduced softness, warmth and absorbency. These occurrences can also interfere with the comfort of the glove for a wearer or user.

The primary issue associated with the conventional polyurethane is that the finished gloves may potentially contain some residual amount of DMF and/or other similar solvent(s) used in the conventional manufacturing process. These solvents are believed to adversely affect the human reproductive systems and are also probable human carcinogens.

WO99/23129 (VBF Goodrich Company) discloses a waterborne polyurethane polymer which is useful as a film having improved mechanical properties.

FR2776168A (Hutchinson) discloses a flexible glove coated on the outer surface with a layer of an elastomer or plastics material.

Therefore, a need exists for a method of manufacture for providing a textile glove supported waterborne polyurethane in particular, a waterborne polyurethane coated glove liner which is free from solvents, DMF in particular and also silicone. In essence, the waterborne polyurethane glove provides environmental-friendly and safe substitution to the controversial DMF-based polyurethane coated glove liner.

### Summary of the Invention

The present invention is defined in the appended claims. There is provided for a DMF-free, solvent-free and silicone-free, waterborne polyurethane-coated liner supported glove. The present invention includes the coating of waterborne polyurethane, either smooth or foam-coating on a glove liner of several coating styles or preferences such as, but not limited to palm-coated, knuckle-coated, finger-coated and full-coated.

There is also provided a process for producing these articles, comprising the compounding of the waterborne polyurethane which is subsequently coated on a glove liner using the conventional dipping process of a supported glove. An example of a material for a suitable glove liner to support the glove can include, but is not limited to nylon or other synthetic polyamides, polyester, cotton, rayon, Dyneema, Kevlar, Lycra, spandex, acrylic and blended yarns of the aforesaid materials. Examples of suitable waterborne polyurethane for the glove can include the followings or those produced and supplied by, but are not limited to Polymer Latex Acralen U500, Acralen U900, Adiprene, Vibrathane, Millathane, Noveon, Solucote, Dow SYNTEGRA, Alberdingk etc.

One advantage of the present invention is that the solvent-free, waterborne polyurethane coated glove liner is both environmental-friendly and safe.

Another advantage of the present invention is that since it does not contain DMF and / or other similar unfavorable solvent, it is not detrimental to the health of the wearers or users as well as to the ecosystems and to the environments surrounding the manufacturing plants.

Another advantage of the present invention is that the waterborne polyurethane coated glove liner is designed to give excellent grip for safe and secure handling.

Another advantageous feature of the present invention is that the lightweight version gives superb tactility and soft feeling to the wearer. This enhances its use for small component handling in industries like the electronic assembly sector, light engineering, etc.

Still another advantageous feature of the present invention is that despite its lightweight construction, this newly designed waterborne polyurethane coated glove liner possesses remarkable abrasion resistance for a glove of this thickness.

Still another advantageous feature of the present invention is the very minimal strikethrough for a comfortable softer feel and superior absorbability of the liner.

Still another advantageous feature of the present invention is the strong resistance against ozone and oxygen attack.

Still other benefits and advantages of the present invention will become apparent to those skilled in the art upon reading and understanding of the following detailed description of the invention.

### Brief Description of the Drawings

FIG. 1 shows the present invention, wherein
FIG. 1a illustrates the palm side elevation view of the present invention
FIG. 1b illustrates the dorsal side elevation view of the present invention
FIG. 2 shows the various coating styles or preferences of the present invention, wherein
FIG. 2a illustrates a palm-coated version of the present invention
FIG. 2b illustrates a knuckle-coated version of the present invention
FIG. 2c illustrates a full-coated version of the present invention
FIG. 2d illustrates a finger-coated version of the present invention

### Detailed Description of the Invention

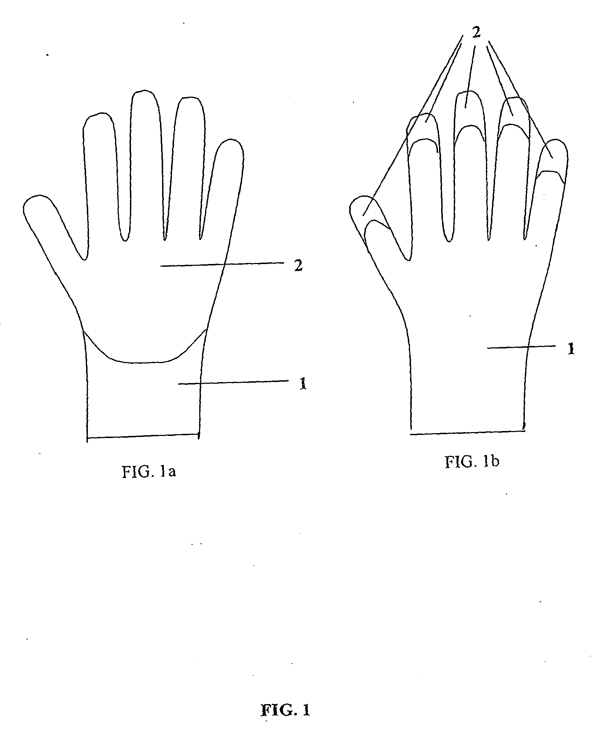

FIG. 1 shows the present invention, wherein FIG. 1a illustrates the palm side elevation view of the present invention and FIG. 1b illustrates the dorsal side elevation view of the present invention which discloses a waterborne polyurethane coated glove liner comprising of :
**a)** a textile glove liner (1)
**b)** waterborne polyurethane (2)

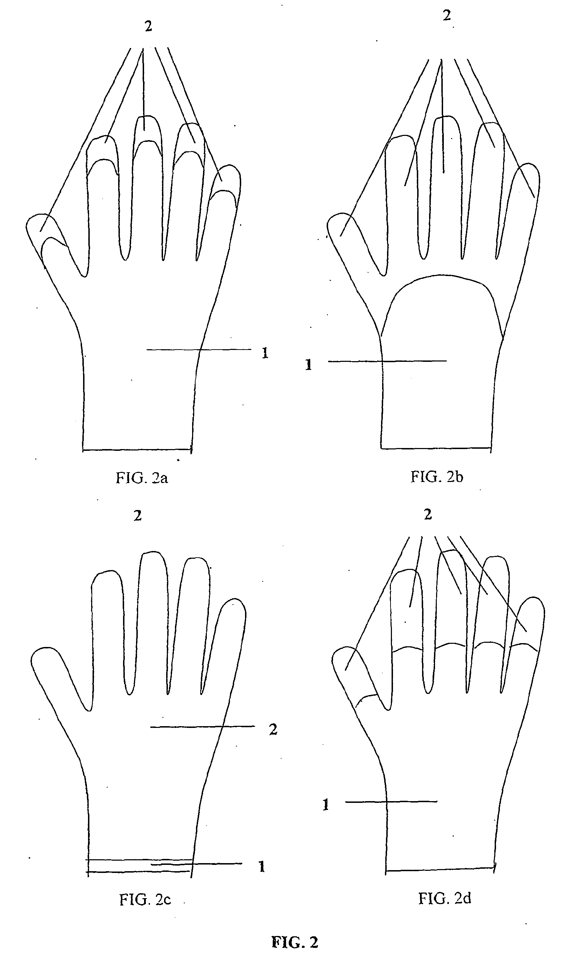

The present invention as illustrated in FIG. 1 includes smooth-coating as well as foam-coating of waterborne polyurethane, which is free from solvents, DMF in particular and also silicone, and which is supported in part by the surface of a textile glove liner of several coating styles or preferences such as, but are not limited to palm-coated, knuckle-coated, full-coated and finger-coated as illustrated in FIG. 2a, 2b, 2c and 2d respectively.

A process or method for making a liner supported waterborne polyurethane glove in accordance with various embodiments of the present invention is hereby disclosed. A suitable glove form can be aluminum or other metal hand shaped former. Conventional heating equipment can be used to manipulate or adjust the temperature of the glove form as needed.

A textile glove liner is first worn on the glove form designed for the specific style of dipping to be applied. The liner-applied glove form, herein termed as the "applied liner" is then heated to approximately 55 °C - 65 °C. The applied liner is dipped into a first dip tank containing a water-based coagulant-type of a typical range of concentrations understood by those skilled in the art. The level or angle of immersion into the coagulant-type solution may be varied, depending on the desired coating styles or preferences such as, but not limited to palm-coated, knuckle-coated, finger-coated and full-coated. The temperature of the water-based coagulant should be maintained at approximately 70 °C ± 5 °C to facilitate rapid vaporization for drying. After applying the coagulant-type solution to the applied liner, the coagulant-coated applied liner is then withdrawn from the first dip tank and allowed to rotate in a suitable manner acquainted by those skilled in the art to restrict the flow of the excess coagulant-type solution. The initially coated applied liner is then dipped into a second dip tank. Again, the level or angle of immersion into the coagulant-type solution may be varied, depending on the desired coating styles or preferences such as, but not limited to palm-coated, knuckle-coated, finger-coated and full-coated.

By way of example, a second dip tank is pre-prepared containing the waterborne polyurethane. A suitable waterborne polyurethane compound is preferably comprised of the following components in the respective approximate ranges as described in Table 1 below.

**Table 1 (suitable ranges of formulation)**

| Components / Ingredients | Range (PHR) |
|---|---|
| Waterborne polyurethane | 100 |
| Zinc Oxide | 0.5-2.0 |
| Titanium dioxide | 1.0-3.0 |
| Pigments/colorants (optional) | 0-1.0 |
| Foaming agent (for foam-coated) | 0.5-2.0 |
| Carboxyl methyl cellulose | 1.0-3.0 |

### Soft Water amount is dependent on the desired solids

Those skilled in the art will readily be able to vary the compounding ingredients in the dipping formulation to suit the final article desired. It will also be understood by those of skill in the art that the specific chemicals or compounds which have been listed above are intended to be representative of conventional materials that may be used in preparing the formulation and are merely intended as non-limiting examples of each such component of the formulation.

Examples of properties and characteristics that the various components in the polymeric compound can preferably include, but are not limited to, are as follows.
- Zinc oxide provides crosslinking of the polymeric compound, for improved reinforcement of film. Other types of suitable materials similar to zinc oxide can include, but are not limited to, sulphur, and the dithiocarbamates accelerators.
- Titanium dioxide and pigments are colorants for the polymeric compound. Other colorants can also be added to the polymeric compound.
- Foaming agent (for foam-coated) induces the formation of foams in the polymeric compound. Suitable agents can include, but are not limited to sodium dodecyl benzene sulphonate, sodium lauryl sulphate, potassium laurate and sodium alkyl benzene sulphonate.
- Carboxyl methyl cellulose is a viscosity modifier designed to thicken the polymeric compound for smooth and even coating. Other types of suitable viscosity modifier can include, but are not limited to polyvinyl alcohol, polyacrylate-based and other cellulosic thickeners.
- Soft water acts as a diluent to bring down the solid content of the polymeric compound to ca 20 ± 5 %. Other level of solid content can be utilized in accordance with various embodiments of the invention.

The applied liner is then removed from the second dip tank comprised of the waterborne polyurethane compound and allowed to rotate in a suitable manner acquainted by those skilled in the art to make an even spread of the polymeric compound and to restrict its flow. The polymer-coated glove liner is then dried at 75°C ± 10 °C by means of an air-ventilated oven or other heating device for about 10-20 minutes or longer as needed to make the film adequately set.

As the coated glove liner exits from the oven, it is leached in clean water at ambient temperature for approximately 2 minutes. The glove liner is then withdrawn from the leach tank and allowed to drip of excess water and air dry for about 15 minutes before entering the curing ovens. By way of example, the coated glove liner is heated in a cure oven for approximately one hour, at a cure temperature of approximately 90°C ± 5°C. Other temperatures, durations and directions can be utilized in accordance with various embodiments of the invention. The cured waterborne polyurethane coated glove liner is removed from the oven and stripped from the former, at which the process or method ends.

While the foregoing description contains many specifics; these specifics should not be construed as limitations on the scope of the invention, but merely as exemplifications of the disclosed embodiments. Numerous changes and modifications may be made therein without departing from the essence and scope of the invention as defined in the following claims. Those skilled in the art will envision many other possible variations that are within the scope of the present invention:

## Claims

1. A waterborne polyurethane coated glove liner comprising :-
a) a textile glove liner; and
b) a waterborne polyurethane coating,
**characterised in that** the coating is free from solvents, DMF in particular and also silicone, and is supported in part by the surface of the textile glove liner, and Further **characterised in that** said glove liner has been dipped in a water-based coagulant-type solution.

2. The waterborne polyurethane coated glove liner as disclosed in claim 1, comprises at least one of the following: nylon or other synthetic polyamides, polyester, cotton, rayon, Dyneema, Kevlar, Lycra, spandex, acrylic and blended yarns of the aforesaid materials.

3. The waterborne polyurethane coated glove liner as disclosed in claim 1, wherein the waterborne polyurethane coating comprises any commercially available waterborne polyurethane.

4. The waterborne polyurethane coated glove liner as disclosed in claim 1, wherein the waterborne polyurethane coating is a compound comprising at least one of the following: zinc oxide, titanium dioxide, pigment(s), carboxyl methyl cellulose, foaming agents (for foam-coating) and soft water.

5. The waterborne polyurethane coated glove liner as disclosed in claim 1, wherein the waterborne polyurethane coating is inclusive of smooth-coating as well as foam-coating on the textile glove liner.

6. A method of manufacturing a waterborne polyurethane coated glove liner, comprising the steps of :
a) applying a first component to a portion of a textile glove liner;
b) applying a second component to the initially coated portion of the textile glove liner;
c) oven drying the textile glove liner;
d) leach the textile glove liner;
e) air drying or oven drying the textile glove liner;
f) curing the textile glove liner,
**characterised in that** said first component comprises a water-based coagulant-type solution, and **in that** said second component comprises a waterborne polyurethane which adheres to the textile glove liner.

7. The method as disclosed in claim 6, wherein the textile glove liner is cured at a temperature of 90°C ± 5°C.

8. The method as disclosed in claim 6, wherein the textile glove liner comprises at least one of the following: nylon or other synthetic polyamides, polyester, cotton, rayon, Dyneema, Kevlar, Lycra, spandex, acrylic and blended yarns of the aforesaid materials.

9. The method as disclosed in claim 6, wherein the second component includes at least one of the following: zinc oxide, titanium dioxide, pigment(s), carboxyl methyl cellulose, foaming agent (for foam-coating) and soft water.

10. The method as disclosed in claim 6, wherein the waterborne polyurethane coating comprises any commercially available waterborne polyurethane.

11. The method as disclosed in claim 6, wherein the water-based coagulant is maintained at a temperature of 70°C ± 5°C to facilitate rapid vaporization for drying.

## Patentansprüche

1. Mit Polyurethan auf wässriger Basis beschichtetes Handschuhfutter, das
a) ein Handschuhfutter auf Textilbasis und
b) eine Beschichtung mit Polyurethan auf wässriger Basis umfasst,
**dadurch gekennzeichnet, dass** die Beschichtung frei von Lösungsmitteln, insbesondere DMF und auch Silikon, ist und zum Teil durch die Oberfläche des Handschuhfutters auf Textilbasis gestützt wird, und das ferner **dadurch gekennzeichnet ist, dass** das Handschuhfutter in eine wässrige Lösung von Koagulierungsmittel getaucht ist.

2. Mit Polyurethan auf wässriger Basis beschichtetes Handschuhfutter nach Anspruch 1, das mindestens eines der folgenden umfasst: Nylon oder andere synthetische Polyamide, Polyester, Baumwolle, Rayon, Dyneema, Kevlar, Lycra, Elastan, Acrylfasern und gemischte Garne der genannten Materialien.

3. Mit Polyurethan auf wässriger Basis beschichtetes Handschuhfutter nach Anspruch 1, wobei die Beschichtung mit Polyurethan auf wässriger Basis irgendein kommerziell erhältliches Polyurethan auf wässriger Basis umfasst.

4. Mit Polyurethan auf wässriger Basis beschichtetes Handschuhfutter nach Anspruch 1, wobei die Beschichtung mit Polyurethan auf wässriger Basis eine Verbindung ist, die mindestens eines der folgenden umfasst: Zinkoxid, Titandioxid, Pigment(e), Carboxylmethylcellulose, Schäumungsmittel (für das Schaumbeschichten) und weiches Wasser.

5. Mit Polyurethan auf wässriger Basis beschichtetes Handschuhfutter nach Anspruch 1, wobei das Beschichten mit Polyurethan auf wässriger Basis ein glattes Beschichten als auch ein Schaumbeschichten des Handschuhsfutters auf Textilbasis einschließt.

6. Verfahren zur Herstellung eines mit Polyurethan auf wässriger Basis beschichteten Handschuhfutters, bei dem:
a) eine erste Komponente auf einen Teil des Handschuhfutters auf Textilbasis aufgebracht wird,
b) eine zweite Komponente auf den eingangs beschichteten Teil des Handschuhfutters auf Textilbasis aufgebracht wird,
c) das Handschuhfutter auf Textilbasis in einem Ofen getrocknet wird,
d) das Handschuhfutter auf Textilbasis ausgewaschen wird,
e) das Handschuhfutter auf Textilbasis an der Luft getrocknet oder in einem Ofen getrocknet wird,
f) das Handschuhfutter auf Textilbasis gehärtet wird, **dadurch gekennzeichnet, dass** die erste Komponente eine wässrige Lösung von Koagulierungsmittel umfasst und die zweite Komponente Polyurethan auf wässriger Basis umfasst, das an dem Handschuhfutter auf Textilbasis haftet.

7. Verfahren nach Anspruch 6, bei dem das Handschuhfutter auf Textilbasis bei einer Temperatur von 90°C ± 5°C gehärtet wird.

8. Verfahren nach Anspruch 6, bei dem das Handschuhfutter auf Textilbasis mindestens eines der folgenden umfasst: Nylon oder andere synthetische Polyamide, Polyester, Baumwolle, Rayon, Dyneema, Kevlar, Lycra, Elastan, Acrylfasern und gemischte Garne der genannten Materialien.

9. Verfahren nach Anspruch 6, bei dem die zweite Komponente mindestens eines der folgenden umfasst: Zinkoxid, Titandioxid, Pigment(e), Carboxylmethylcellulose, Schäumungsmittel (für das Schaumbeschichten) und weiches Wasser.

10. Verfahren nach Anspruch 6, bei dem die Beschichtung aus Polyurethan auf wässriger Basis irgendein kommerziell erhältliches Polyurethan auf wässriger Basis umfasst.

11. Verfahren nach Anspruch 6, bei dem das Koagulierungsmittel auf wässriger Basis bei einer Temperatur von 70°C ± 5°C gehalten wird, um die schnelle Verdampfung für das Trocknen zu beschleunigen.

## Revendications

1. Doublure de gant revêtue de polyuréthane à base aqueuse comprenant :
a) une doublure de gant en matière textile ; et
b) un revêtement de polyuréthane à base aqueuse,
**caractérisée par le fait que** le revêtement est exempt de solvants, le DMF en particulier, et également de silicone, et est supporté en partie par la surface de la doublure de gant en matière textile, et en outre **caractérisée par le fait que** ladite doublure de gant a été trempée dans une solution de type coagulant à base aqueuse.

2. Doublure de gant revêtue de polyuréthane à base aqueuse, selon la revendication 1, qui comprend au moins l'un des suivants : fils de nylon ou autres polyamides synthétiques, polyester, coton, rayonne, Dyneema, Kevlar, Lycra, spandex, acryliques et fils mélangés desdites matières précitées.

3. Doublure de gant revêtue de polyuréthane à base aqueuse, selon la revendication 1, dans laquelle le revêtement de polyuréthane à base aqueuse comprend tout polyuréthane à base aqueuse disponible dans le commerce.

4. Doublure de gant revêtue de polyuréthane à base aqueuse selon la revendication 1, dans laquelle le revêtement de polyuréthane à base aqueuse est un composé comprenant au moins l'un des suivants : oxyde de zinc, dioxyde de titane, pigment(s), carboxyl méthyl cellulose, agents moussants (pour un revêtement mousse) et eau douce.

5. Doublure de gant revêtue de polyuréthane à base aqueuse, selon la revendication 1, dans laquelle le revêtement de polyuréthane à base aqueuse inclut un revêtement lisse ainsi qu'un revêtement mousse sur la doublure de gant en matière textile.

6. Procédé de fabrication d'une doublure de gant revêtue de polyuréthane à base aqueuse, comprenant les étapes consistant à :
a) appliquer un premier composant sur une partie d'une doublure de gant en matière textile ;
b) appliquer un second composant sur la partie initialement revêtue de la doublure de gant en matière textile ;
c) sécher au four la doublure de gant en matière textile ;
d) lessiver la doublure de gant en matière textile ;
e) sécher à l'air et sécher au four la doublure de gant en matière textile ;
f) faire durcir la doublure de gant en matière textile, **caractérisé par le fait que** ledit premier composant comprend une solution de type coagulant à base aqueuse, et **par le fait que** ledit second composant comprend un polyuréthane à base aqueuse qui adhère à la doublure de gant en matière textile.

7. Procédé selon la revendication 6, dans lequel la doublure de gant en matière textile est durcie à une température de 90 °C ± 5 °C.

8. Procédé selon la revendication 6, dans lequel la doublure de gant en matière textile comprend au moins l'un des suivants : fils de nylon ou autres polyamides synthétiques, polyester, coton, rayonne, Dyneema, Kevlar, Lycra, spandex, acryliques et fils mélangés des matières précitées.

9. Procédé selon la revendication 6, dans lequel le second composant comprend au moins l'un des suivants : oxyde de zinc, dioxyde de titane, pigment(s), carboxyl méthyl cellulose, agent moussant (pour un revêtement mousse) et eau douce.

10. Procédé selon la revendication 6, dans lequel le revêtement de polyuréthane à base aqueuse comprend tout polyuréthane à base aqueuse disponible dans le commerce.

11. Procédé selon la revendication 6, dans lequel le coagulant à base aqueuse est maintenu à une température de 70 °C ± 5 °C pour faciliter une évaporation rapide en vue du séchage.
